(19) Europäisches Patentamt
European Patent Office
Office européen des brevets

(11) **EP 3 737 594 B1**

(12) **EUROPÄISCHE PATENTSCHRIFT**

(45) Veröffentlichungstag und Bekanntmachung des Hinweises auf die Patenterteilung:
**20.10.2021 Patentblatt 2021/42**

(21) Anmeldenummer: **19701030.9**

(22) Anmeldetag: **08.01.2019**

(51) Int Cl.:
**B60T 13/24** *(2006.01)*

(86) Internationale Anmeldenummer:
**PCT/EP2019/050298**

(87) Internationale Veröffentlichungsnummer:
**WO 2019/137892 (18.07.2019 Gazette 2019/29)**

(54) **VORRICHTUNG UND VERFAHREN ZUR REALISIERUNG KONTROLLIERTER REAKTIONEN BEI EINER SYSTEMSTÖRUNG**

SYSTEM AND METHOD FOR OBAINMENT OF CONTROLLED REACTIONS INCASE OF SYSTEM FAILURE

SYSTÈME ET PROCÉDÉ POUR OBTENIR DES RÉACTIONS CONTRÔLÉES DAN LE CAS D'UN DÉFAUT DE SYSTÈME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.01.2018 DE 102018200487**

(43) Veröffentlichungstag der Anmeldung:
**18.11.2020 Patentblatt 2020/47**

(73) Patentinhaber: **KNORR-BREMSE Systeme für Schienenfahrzeuge GmbH 80809 München (DE)**

(72) Erfinder:
• **LOUCA, Sebastian**
  **04229 Leipzig (DE)**
• **RIEDIGER, Oliver**
  **81547 München (DE)**
• **SCHMIDT, Maximilian**
  **80797 München (DE)**
• **ANSTEY, Nigel**
  **Bath BA1 3HE (GB)**

(56) Entgegenhaltungen:
| | |
|---|---|
| AT-B- 370 368 | CN-Y- 2 516 409 |
| DE-A1- 2 634 319 | DE-A1- 2 643 805 |
| DE-A1-102009 051 019 | DE-B- 1 066 225 |
| FR-A1- 2 134 462 | |

**Beschreibung**

Die vorliegende Erfindung betrifft eine Steuervorrichtung und ein Verfahren zum Steuern eines Notbremsdrucks eines Fahrzeuges, sowie ein Fahrzeug mit einer derartigen Steuervorrichtung.

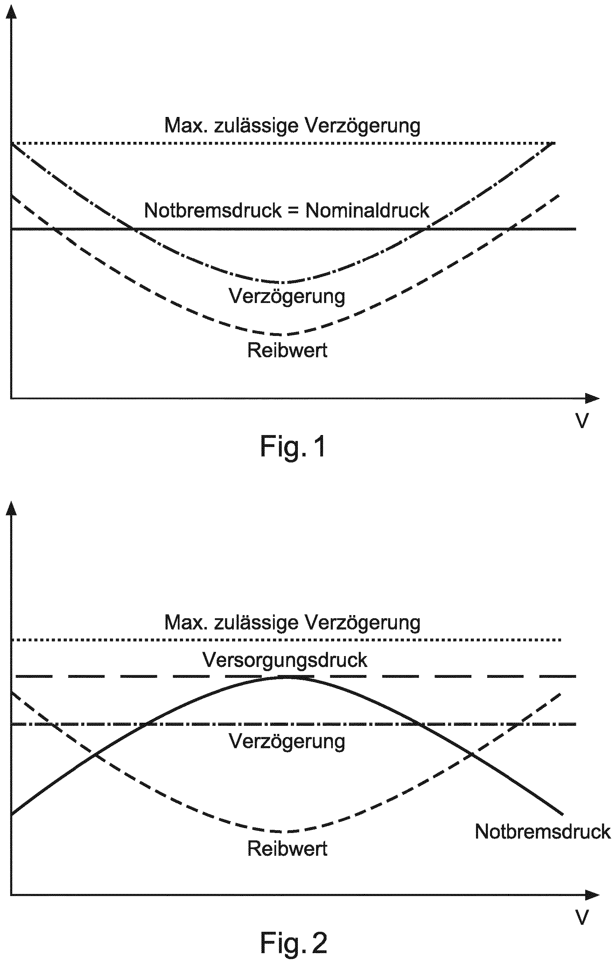

In heutigen Systemen wird im Fall einer Notbremsung ein fester Notbremsdruck in der Höhe von einem Nominaldruck, welcher an einen Beladungszustand des Fahrzeugs angepasst ist, in den Bremszylinder geleitet. Dies führt auf Grund des unterschiedlichen Reibverhaltens zwischen dem Bremsbelag und der Bremsscheibe (des Bremsrades) in Abhängigkeit von der Geschwindigkeit zu unterschiedlichen Verzögerungen (bzw. Bremsverzögerungen), verteilt auf die Geschwindigkeit. Wie in **Fig. 1** gezeigt, ist der Notbremsdruck konstant, wobei der Reibwert einen U-förmigen Kurvenverlauf aufweist: im niedrigen Geschwindigkeitsbereich sinkt der Reibwert, wenn sich die Geschwindigkeit erhöht, und im hohen Geschwindigkeitsbereich erhöht sich der Reibwert, wenn sich die Geschwindigkeit erhöht. Die Verzögerung ist abhängig von dem Notbremsdruck und dem Reibwert, und in diesem Fall weist sie ein ähnliches Verhältnis wie der Reibwert zu der Geschwindigkeit auf.

Die Verzögerung soll z. B. für den Fahrkomfort und der Sicherheit wegen möglichst konstant gehalten werden. Eine Lösung dafür ist es, einen geeigneten Regler in dem System einzusetzen, um den Notbremsdruck nicht nur in Abhängigkeit von dem Beladungszustand des Fahrzeugs sondern auch von der Verzögerung, der Geschwindigkeit und / oder dem Reibwert zu steuern. Wie in **Fig. 2** gezeigt, wird der Notbremsdruck so gesteuert, dass er in dem niedrigen Geschwindigkeitsbereich und dem hohen Geschwindigkeitsbereich kleiner als im mittleren Geschwindigkeitsbereich ist und in einer umgedrehten U-Form verläuft, wodurch die Verzögerung konstant wird. Damit die Verzögerung bei einem passenden Niveau (normalerweise größer als die niedrigste Verzögerung der Fig. 1) konstant bleibt, ist es notwendig, dass ein Versorgungsdruck für die Erzeugung des Notbremsdrucks in Fig. 2 größer als der konstante Notbremsdruck aus Fig. 1 ist.

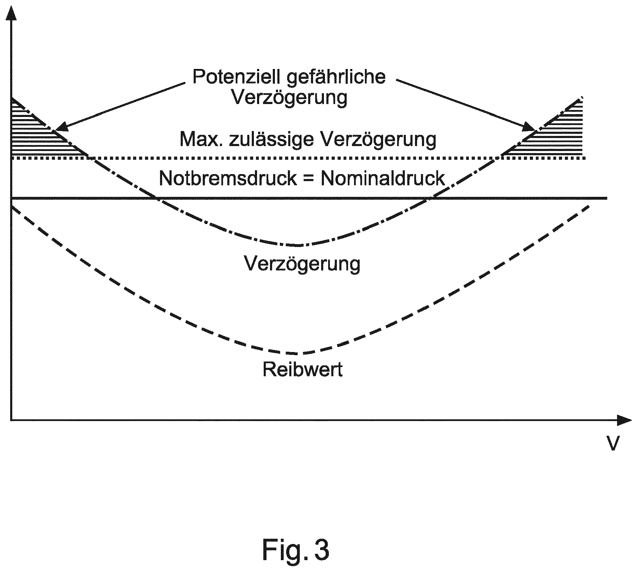

Solche Systeme mit der oben beschriebenen Lösung sind in den meisten Fällen "low aktiv", d. h. ein Abfallen einer elektrischen Spannung lässt den Versorgungsdruck ungeregelt zu den Bremszylindern durch, wie in **Fig. 3** gezeigt. In diesem Fall ist der Notbremsdruck genau so groß wie der Versorgungsdruck, dadurch weist die Verzögerung einen U-förmigen Verlauf auf. Da der Versorgungsdruck größer als der konstante Notbremsdruck aus Fig. 1 ist, wie oben beschrieben, wird die Verzögerung bei Systemstörung z. B. bei einem Stromausfall in dem niedrigsten Geschwindigkeitsbereich und dem höchsten Geschwindigkeitsbereich zu groß. Somit überschreitet sie die maximal zulässige Verzögerung.

Die Druckschrift DE 10 2009 051019 A1 offenbart eine Notbremseinrichtung eines Schienenfahrzeugs mit wenigstens einer Notbremsschleife, durch welche wenigstens ein Steuergerät wenigstens einer elektro-pneumatischen Reibungsbremse und/oder wenigstens einer generatorischen Bremse zum Notbremsen mittels der elektro-pneumatischen Reibungsbremse und/oder der generatorischen Bremse steuerbar ist. Offenbart ist, dass das wenigstens eine Steuergerät eine elektrische Schalteinrichtung derart ansteuert, dass diese bei Vorliegen eines Fehlers in dem wenigstens einen Steuergerät oder in dessen Stromversorgung eine elektro-magnetische Notbremsventileinrichtung mit der Notbremsschleife in eine elektrische Steuerverbindung derart schaltet, dass wenigstens ein pneumatischer Bremsaktuator der Reibungsbremse bei geöffneter Notbremsschleife durch die elektro-magnetische Notbremsventileinrichtung zur Erzeugung einer Notbremskraft pneumatisch gesteuert wird. Damit wird eine Steuervorrichtung zum Steuern eines Notbremsdrucks eines Fahrzeuges offenbart, die aufweist: einen Druckregler konfiguriert, um einen Vorsteuerdruck VSD1 für einen regulären Betrieb zu regeln, wobei der VSD1 in Abhängigkeit von einem Beladungszustand des Fahrzeugs, einer Verzögerung, einer Geschwindigkeit und / oder einem Reibwert vorher bestimmt wird, eine Einstelleinrichtung konfiguriert, um einen Sicherheit-Vorsteuerdruck SVSD bei Systemstörung zu steuern, einen Druckübersetzer, aufweisend einen Druckeingang für eine pneumatische oder hydraulische Druckversorgung, mindestens einen Druckeingang für mindestens einen Vorsteuerdruck, einen Druckausgang für einen Notbremsdruck.

Der Erfindung liegt daher die Aufgabe zu Grunde, eine Steuervorrichtung und ein Verfahren zu schaffen, mit denen der Notbremsdruck in Abhängigkeit von einem Beladungszustand eines Fahrzeugs, einer Verzögerung, einer Geschwindigkeit und / oder einem Reibwert gesteuert werden kann, während ein potentiell gefährlich hohes Druckniveau des Notbremsdrucks nach Verlust der elektrischen Spannung verhindert wird, und der Notbremsdruck in diesem Fall auf ein sicheres Nominaldruckniveau gebracht wird.

Diese Aufgabe wird erfindungsgemäß mit einer Steuervorrichtung zum Steuern eines Notbremsdrucks eines Fahrzeuges nach Anspruch 1 gelöst. Weiterhin wird die Aufgabe mit einem Verfahren nach Anspruch 14 gelöst. Vorteilhafte Ausgestaltungen der Erfindung sind in den Unteransprüchen enthalten.

Erfindungsgemäß besteht die Lösung der Aufgabe in einer Steuervorrichtung zum Steuern eines Notbremsdrucks eines Fahrzeuges, aufweisend: einen Druckregler, der konfiguriert ist, um einen Vorsteuerdruck VSD1 für einen regulären Betrieb zu regeln, wobei der VSD1 in Abhängigkeit von einem Beladungszustand des Fahrzeugs, einer Verzögerung, einer Geschwindigkeit und / oder einem Reibwert vorher bestimmt wird, eine Einstelleinrichtung, die konfiguriert ist, um einen Sicherheit-Vorsteuerdruck SVSD bei Systemstörung (z. B. bei Stromausfall, oder bei bestimmten Diagnosefällen, z.B. Fehlfunktion des Druckreglers) zu steuern, und einen Druckübersetzer (beispielsweise ein Relaisventil), der einen Druckeingang für eine pneumatische oder hydraulische Druckversorgung, mindestens einen Druckeingang für mindestens einen Vorsteuerdruck und einen Druckausgang für einen Notbremsdruck aufweist, wobei der Druckübersetzer konfiguriert ist, um einen Versorgungsdruck der Druckversorgung von dem Vorsteuerdruck VSD1 oder SVSD zu steuern und danach als den Notbremsdruck abzugeben. Weiterhin ist Steuervorrichtung so konfiguriert, dass im regulären Betrieb nur der VSD1 zu dem Druckübersetzer zur Steuerung des Versorgungsdrucks zugeführt wird, und bei Systemstörung nur der SVSD zu dem Druckübersetzer zur Steuerung des Versorgungsdrucks zugeführt wird, wobei sichergestellt wird, dass der Notbremsdruck bei Systemstörung unterhalb eines Nominaldrucks bleibt.

Beispielsweise ist ein Magnetventil vor dem Druckübersetzer und nach dem Druckregler angeordnet und konfiguriert, um den VSD1 im regulären Betrieb durchzulassen und bei Systemstörung nicht durchzulassen.

Weiterhin ist beispielsweise ein zweites Magnetventil vor dem Druckübersetzer angeordnet und konfiguriert, um den SVSD im regulären Betrieb abzusperren und bei Systemstörung zu dem Druckübersetzer durchzulassen.

In einem Ausführungsbeispiel weist der Druckregler zwei Magnetventile auf, wobei eines davon als Belüfter dient und das andere davon als Entlüfter dient. Der Druckregler kann vorteilhafterweise noch einen Drucksensor aufweisen.

Vorteilhafterweise kann ein Druckminderventil vor dem Druckregler angeordnet werden, um einen maximal zulässigen Vorsteuerdruck zu regeln und diesen weiter an den Druckregler abzugeben, damit der Druckregler einen zugeführten Druck nicht von einem zu hohen Druckniveau herunter regeln muss, um Energie zu sparen.

In einem vorteilhaften Ausführungsbeispiel weist die Einstelleinrichtung des SVSD ein Druckminderventil auf, um sicherzustellen, dass der SVSD unabhängig von der Systemstörung oberhalb eines minimalen Vorsteuerdrucks gehalten wird.

Die Einstelleinrichtung des SVSD kann in einem anderen Ausführungsbeispiel ferner einen Druckregler aufweisen, um den SVSD zu steuern.

Weiterhin kann der Druckübersetzer entweder zwei Eingangsanschlüsse für Vorsteuerdrücke oder nur einen Eingangsanschluss für einen Vorsteuerdruck aufweisen, wobei in dem Fall von nur einem Eingangsanschluss ein Umschaltgerät (beispielsweise ein Doppelrückschlagventil) vorgesehen ist, damit nur ein Vorsteuerdruck weiter zu dem Druckübersetzer durchgelassen wird.

Vorteilhafterweise kann der Drückübersetzer einen Kolben und mindestens einen Druckteller aufweisen, um den Versorgungsdruck durch Druckvergleich und Kolbenbewegung zu steuern.

Im Folgenden wird die Erfindung anhand dreier Ausführungsbeispiele in Bezugnahme auf die Figuren näher erläutert.

Es zeigen:

Fig. 1 einen Verlauf der Verzögerung bei einem Bremsvorgang abhängig von der Geschwindigkeit und dem Reibwert, wenn der Notbremsdruck in der Höhe von einem Nominaldruck konstant ist;

Fig. 2 eine konstante Verzögerung bei einem Bremsvorgang abhängig von der Geschwindigkeit und dem Reibwert, wenn der Notbremsdruck entsprechend gesteuert wird;

Fig. 3 einen Verlauf der Verzögerung bei einem Bremsvorgang abhängig von der Geschwindigkeit und dem Reibwert, wenn der Notbremsdruck in der Höhe von einem Versorgungsdruck konstant ist;

**Fig. 4** eine schematische Darstellung einer Steuervorrichtung gemäß eines ersten Ausführungsbeispiels der Erfindung;

**Fig. 5** eine schematische Darstellung des Relaisventils der Fig. 4;

**Fig. 6** eine schematische Darstellung einer Steuervorrichtung gemäß eines zweiten Ausführungsbeispiels der Erfindung;

**Fig. 7** eine schematische Darstellung einer Steuervorrichtung gemäß eines dritten Ausführungsbeispiels der Erfindung;

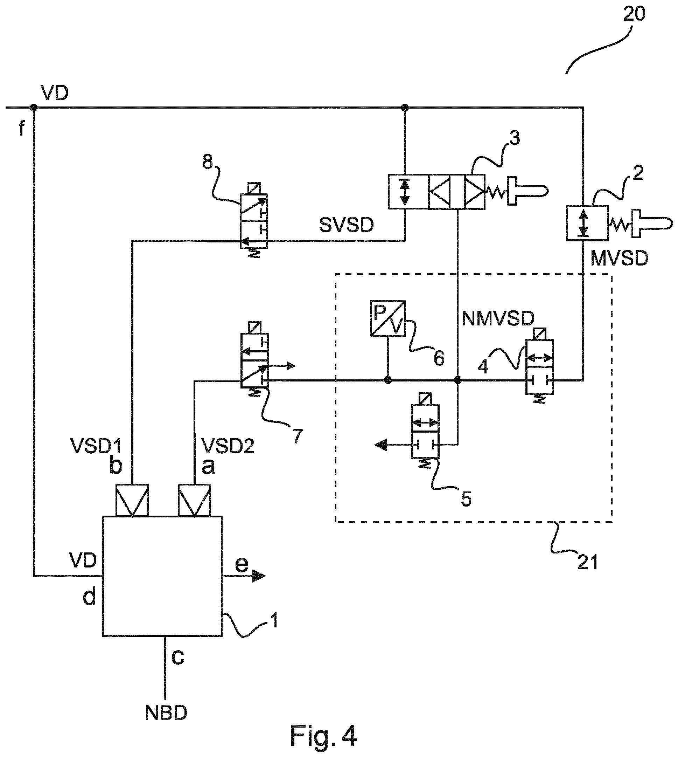

Fig. 4 zeigt eine Steuervorrichtung 20 gemäß einem ersten Ausführungsbeispiel der Erfindung in einem Systemstörung-Zustand. Ein Relaisventil 1 und zwei Druckminderventile 2 und 3 sind vorgesehen, wobei Druckluft als eine Druckversorgung über einen Druckluftanschluss f über einen Eingangsanschluss d zu dem Relaisventil 1 und zu den Druckminderventilen 2 und 3 geführt wird.

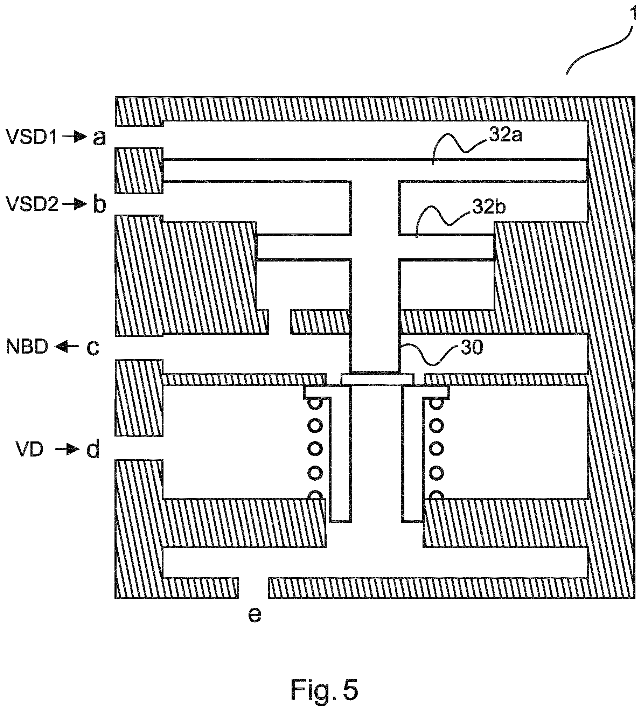

Fig. 5 zeigt eine detaillierte Ansicht des Relaisventils 1. Zusätzlich zu dem oben genannten Eingangsanschluss d weist das Relaisventil noch zwei Eingangsanschlüsse a und b, und zwei Ausgangsanschlüsse c und e auf. Über die Eingangsanschlüsse a und b werden jeweils Vorsteuerdrücke VSD1 und VSD2 in das Relaisventil eingeführt. Der Vorsteuerdruck VSD1 wirkt auf einen Druckteller 32a und der Vorsteuerdruck VSD2 wirkt auf einen Druckteller 32b, die beide an einem Kolben 30 axial angeordnet sind, wodurch der Kolben 30 bewegt wird, um einen Versorgungsdruck (VD) der Druckversorgung zu steuern und danach als einen Notbremsdruck (NBD) über den Ausgangsanschluss c abzugeben. Der Ausgangsanschluss e ist vorgesehen, um überschüssige Druckluft an die Umgebung zu entlüften. Der Durchmesser des Drucktellers 32a ist größer als der Durchmesser des Drucktellers 32b. Entsprechend sind die Druckübertragungsverhältnisse der beiden Druckteller unterschiedlich. Das untere Ende des Kolbens 30 schließt an ein abdichtendes Kolbenelement ab, das durch eine Feder gegen eine Kammeröffnung drückt und diese abdichtet. Diese Kammer wird mit dem Versorgungsdruck VD befüllt. Je nach der Kolbenbewegung des Kolbens 30, gesteuert von VSD1 oder VSD2 wird die Öffnung zum Ausgang c geöffnet so dass der Notbremsdruck NBD durch den Ausgang c geleitet wird.

Gemäß der Steuerung mittels des Relaisventils 1 entstehen ein Übersetzungsverhältnis y zwischen dem VSD1 und dem NBD und ein Übersetzungsverhältnis x zwischen dem VSD2 und dem NBD. Es ist vorgesehen, dass der VSD 1 den VD so steuert, dass der NBD größer als der VSD1 wird, d.h.

$$y = NBD / VSD1 > 1.$$

Und es ist vorgesehen, dass der VSD2 den VD so steuert, dass der NBD kleiner als der VSD2 wird, d.h.

$$x = NBD / VSD2 < 1.$$

Durch Anpassen der Größe von Drucktellern 32a und 32b können die Übersetzungsverhältnisse x und y beliebig eingestellt werden.

Weiterhin ist das Druckminderventil 2 in der Fig. 4 konfiguriert, um den VD der Druckluftversorgung auf einen maximal zulässigen Vorsteuerdruck (MVSD) zu reduzieren und den MVSD weiter an einen Druckregler 21 durchzuleiten. Ein Vorteil dabei ist es, dass der Druckregler 21 einen zugeführten Druck nicht von einem zu hohen Druckniveau herunter regeln muss, um Energie zu sparen.

Der Druckregler 21 weist zwei Magnetventile 4 und 5 und einen Drucksensor 6 auf, wobei die Magnetventile 4 und 5 konfiguriert sind, um den zugeführten Druck auf ein vorgegebenes Niveau zu regeln und der Drucksensor 6 konfiguriert ist, um einen geregelten Druck zu messen und ggf. ein Signal zu generieren, damit die Magnetventile 4 und 5 eine etwaige Abweichung korrigieren können.

In dieser Ausführungsform ist vorgesehen, dass der Druckregler 21 den MVSD von dem Druckminderventil 2 auf einen nominellen Vorsteuerdruck (NMVSD) regelt, wobei der NMVSD in Abhängigkeit von einem Beladungszustand des Fahrzeuges, einer Verzögerung, einer Geschwindigkeit und / oder einem Reibwert mittels einer vorgegebenen Recheneinheit berechnet und an den Druckregler 21 abgegeben wird.

Ein Magnetventil 7 ist nach dem Druckregler 21 angeordnet, wobei es konfiguriert ist, dass es in einem regulären Betrieb aktiv bleibt und den NMVSD von dem Druckregler 21 zu dem Eingangsanschluss a des Relaisventils 1 durchlässt (VSD1 = NMVSD). Danach übersetzt das Relaisventil 1 diesen VSD1 mit dem Übersetzungsverhältnis y in einen höheren Druck, d.h.

$$NBD \text{ (im regulären Betrieb)} = VSD1 * y.$$

Das Druckminderventil 3 ist vorgesehen, um den VD mit dem NMVSD von dem Druckregler 21 zu steuern und weiter zu einem Magnetventil 8 durchzulassen, wobei das Druckminderventil 3 konfiguriert ist, dass es zunächst den VD auf einen minimalen Vorsteuerdruck reduziert (mechanisch und unabhängig von einer elektrischen Spannung) und danach den minimalen Vorsteuerdruck mit dem NMVSD vom Druckregler 21 steuert (erhöht), wodurch ein Sicherheit-Vorsteuerdruck (SVSD) entsteht. Im regulären Betrieb ist es so eingestellt, dass SVSD = NMVSD.

Das Magnetventil 8 ist nach dem Druckminderventil 3 angeordnet, wobei es so konfiguriert ist, dass es im regulären Betrieb aktiv bleibt und die Weiterführung des SVSD von dem Druckminderventil 3 zu dem Relaisventil 1 absperrt.

Im Falle eines Stromverlustes fällt das Magnetventil 7 ab und lässt den NMVSD von dem Druckregler 21 entlüften, und gleichzeitig fällt auch das Magnetventil 8 ab und lässt den SVSD zu dem Eingangsanschluss b des Relaisventils 1 durch (VSD2 = SVSD). Durch das Entlüften sinkt der VSD1 allmählich ab, und daher sinkt der VSD2 von einem Niveau vom NMVSD bis zu dem Niveau des minimalen Vorsteuerdrucks ab.

Auf dieser Weise ermöglicht die Konstitution der Magnetventile 7 und 8 es, dass der VD bei Systemstörung nur vom VSD2 gesteuert wird und ein NBD (bei Systemstörung) somit abgesichert ist, wobei

$$NBD\ (bei\ Systemstörung) = VSD2 * x,$$

wie oben beschrieben. Am Anfang des Auftritts der Systemstörung ist der VSD2 = NMVSD, und das Übersetzungsverhältnis x ist so eingestellt, dass

$$NBD\ (bei\ Systemstörung) = NMVSD * x = Nominaldruck,$$

also x = Nominaldruck / NMVSD.

Danach sinkt der VSD2 in Richtung des minimalen Vorsteuerdrucks ab, somit sinkt auch der NBD (bei Systemstörung) von dem Nominaldruck allmählich bis zu einer Untergrenze ab. Demzufolge ist im Falle einer Systemstörung ein NBD, der den Nominaldruck nicht überschreitet und die Untergrenze nicht unterschreitet, zur Verfügung gestellt.

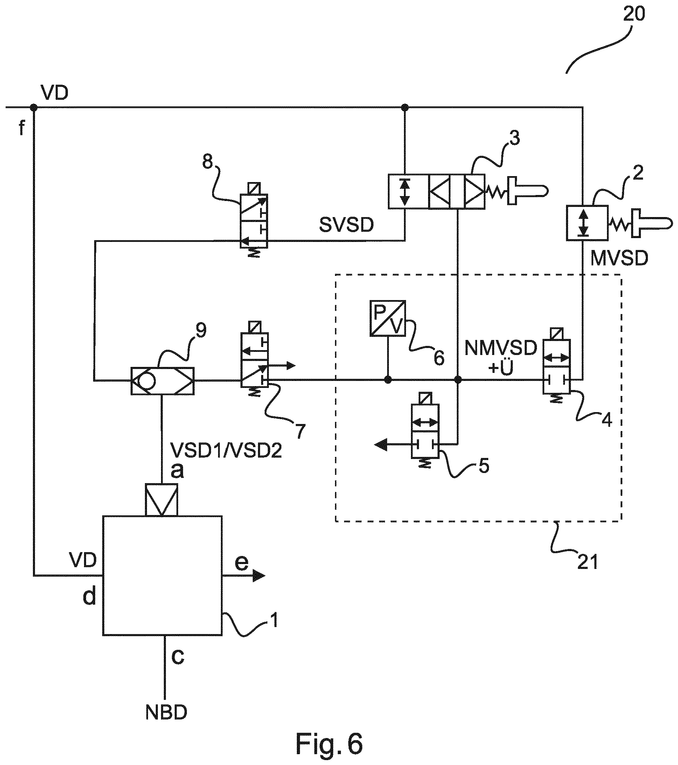

Fig. 6 zeigt eine Steuervorrichtung 20 gemäß einem zweiten Ausführungsbeispiel der Erfindung in einem Systemstörung-Zustand. Ein Relaisventil 1 analog wie in Fig. 4 ist vorgesehen, wobei der Eingangsanschluss b weggelassen wurde und nur der Eingangsanschluss a vorhanden ist. Ebenso wie in Fig. 4 sind zwei Druckminderventile 2 und 3, ein Druckregler 21 einschließlich zweier Magnetventile 4 und 5 und eines Drucksensors 6, und zwei Magnetventile 7 und 8 vorgesehen. Zusätzlich zu der Ausführungsform in Fig. 4 weist die Ausführungsform der Fig. 6 ein Doppelrückschlagventil 9 vor dem Relaisventil 1 auf, um einen Druckvergleich zwischen den Vorsteuerdrücken nach den Magnetventilen 7 und 8 auszuführen, um nur den größeren Vorsteuerdruck weiter zu dem Eingangsanschluss a des Relaisventils 1 durchzulassen.

Die Komponenten in Fig. 6 mit den gleichen Bezugszeichen wie in Fig. 4 sind genauso konfiguriert wie in Fig. 4. Der Unterschied liegt darin, dass der Vorsteuerdruck VSD1, geregelt von dem Druckregler 21, auf ein Niveau eines nominellen Vorsteuerdrucks mit einer Überhöhung Ü gebracht wird, d.h.

$$VSD1 = NMVSD + Ü,$$

wobei das Druckminderventil 3 weiterhin wie in Fig. 4 den VSD1 vom Druckregler 21 den VD steuert und einen SVSD abgibt. Am Anfang wird der SVSD auf einem Niveau von NMVSD gehalten (SVSD = NMVSD).

Wie in Fig. 4 ist die Konstitution in Fig. 6 auch so ausgelegt, dass der VD im regulären Betrieb nur vom VSD1 und bei Systemstörung nur vom VSD2 mittels des Relaisventils 1 gesteuert wird. In beiden Fällen ist nur das Übersetzungsverhältnis x vorhanden. D.h.

$$NBD\ (bei\ Systemstörung) = VSD2 * x.$$

Da am Anfang des Auftrittes der Systemstörung VSD2 = NMVSD, ist dann in diesem Fall auch wie in Fig. 4,

$$NBD\ (bei\ Systemstörung) = NMVSD * x = Nominaldruck.$$

Im regulären Betrieb ist dann

$$NBD\ (im\ regulären\ Betrieb) = VSD1 * x = (NMVSD + Ü) * x,$$

Da das Übersetzungsverhältnis x fest auf den Wert von Nominaldruck / NMVSD eingestellt ist, muss also die Überhöhung Ü entsprechend bestimmt werden, damit der NBD (im regulären Betrieb) einen passenden Betrag aufweist.

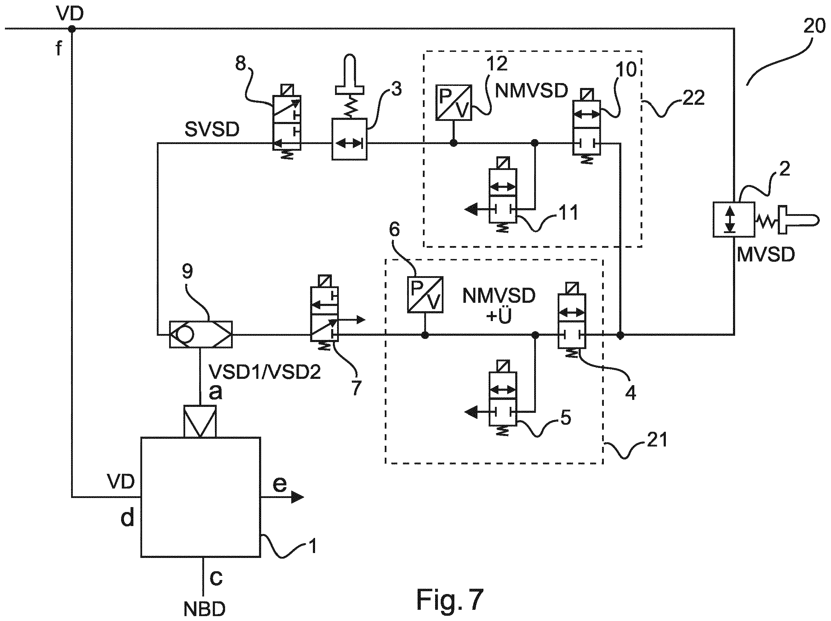

Fig. 7 zeigt eine Steuervorrichtung 20 gemäß einem dritten Ausführungsbeispiel der Erfindung, wobei die Steuervorrichtung 20 im Prinzip gleich wie die Steuervorrichtung 20 der Fig. 6 funktioniert. Im Vergleich zu dem Ausführungsbeispiel der Fig. 6 weist die Steuervorrichtung 20 der Fig. 7 zusätzlich einen Druckregler 22 einschließlich zweier Magnetventile 4 und 5 und eines Drucksensors 6, ähnlich wie der Druckregler 21, auf, um einen SVSD unabhängig von dem VSD2 von dem Druckregler 21 zu steuern. Wie in der

Fig. 6 wird der SVSD am Anfang auch auf NMVSD gehalten. Im regulären Betrieb regelt der Druckregler 21 einen VSD1 (VSD1 = NMVSD + Ü), wie oben beschrieben, und gleichfalls ist

$$NBD \text{ (im regulären Betrieb)} = VSD1 * x = (NMVSD + Ü) * x,$$

und bei Systemstörung gilt

$$NBD \text{ (bei Systemstörung)} = VSD2 * x.$$

Die obigen Ausführungsbeispiele ermöglichen es, einen passenden NBD im regulären Betrieb anhand eines vorher bestimmten NMVSD zu erhalten, damit der NBD in Abhängigkeit von einem Beladungszustand des Fahrzeuges, einer Verzögerung, einer Geschwindigkeit und / oder einem Reibwert gesteuert wird und dadurch die Verzögerung möglichst konstant bleibt, und bei Systemstörung ein NBD zwischen einem Nominaldruck und einer Untergrenze zur Verfügung gestellt wird.

BEZUGSZEICHENLISTE

| | |
|---|---|
| 1 | Druckübersetzer |
| 2, 3, 7, 8 | Druckminderventil |
| 4, 5 | Magnetventil |
| 6 | Drucksensor |
| 9 | Umschaltgeräte / Doppelrückschlagventil |
| 20 | Steuervorrichtung |
| 21, 22 | Druckregler |
| 30 | Kolben |
| 32a, 32b | Druckteller |

**Patentansprüche**

1. Steuervorrichtung (20) zum Steuern eines Notbremsdrucks eines Fahrzeuges, aufweisend:

   - einen Druckregler (21) konfiguriert, um einen Vorsteuerdruck VSD1 für einen regulären Betrieb zu regeln, wobei der VSD1 in Abhängigkeit von einem Beladungszustand des Fahrzeugs, einer Verzögerung, einer Geschwindigkeit und / oder einem Reibwert vorher bestimmt wird,
   - eine Einstelleinrichtung konfiguriert, um einen Sicherheit-Vorsteuerdruck SVSD bei Systemstörung zu steuern,
   - einen Druckübersetzer (1), aufweisend:

      - einen Druckeingang für eine pneumatische oder hydraulische Druckversorgung,
      - mindestens einen Druckeingang für mindestens einen Vorsteuerdruck,
      - einen Druckausgang für einen Notbremsdruck,

   wobei der Druckübersetzer (1) konfiguriert ist, um einen Versorgungsdruck der Druckversorgung von dem Vorsteuerdruck VSD1 oder SVSD zu steuern und danach als den Notbremsdruck abzugeben,
   wobei die Steuervorrichtung (20) so konfiguriert ist, dass
   im regulären Betrieb nur der VSD1 zu dem Druckübersetzer (1) zur Steuerung des Versorgungsdrucks zugeführt wird, und bei Systemstörung nur der SVSD zu dem Druckübersetzer (1) zur Steuerung des Versorgungsdrucks zugeführt wird, wobei sichergestellt wird, dass der Notbremsdruck bei Systemstörung unterhalb eines Nominaldrucks bleibt.

2. Steuervorrichtung (20) nach Anspruch 1, ferner aufweisend:
   ein Magnetventil (7), das vor dem Druckübersetzer (1) und nach dem Druckregler (21) angeordnet und konfiguriert ist, um den VSD1 im regulären Betrieb durchzulassen und bei Systemstörung nicht durchzulassen.

3. Steuervorrichtung (20) nach Anspruch 1 oder 2, ferner aufweisend:

   - ein Magnetventil (8), das vor dem Druckübersetzer (1) angeordnet und konfiguriert ist, um den SVSD im regulären Betrieb abzusperren und bei Systemstörung zu dem Druckübersetzer (1) durchzulassen.

4. Steuervorrichtung (20) nach einem der vorherigen Ansprüche, wobei der Druckregler (21) zwei Magnetventile (4, 5) aufweist, wobei eines davon als Belüfter dient und das andere davon als Entlüfter dient.

5. Steuervorrichtung (20) nach einem der vorherigen Ansprüche, wobei der Druckregler (21) einen Drucksensor (6) aufweist.

6. Steuervorrichtung (20) nach einem der vorherigen Ansprüche, ferner aufweisend:
ein Druckminderventil (2), das vor dem Druckregler (21) angeordnet ist, um einen maximal zulässigen Vorsteuerdruck zu regeln und diesen weiter an den Druckregler (21) abzugeben.

7. Steuervorrichtung (20) nach einem der vorherigen Ansprüche, wobei
die Einstelleinrichtung des SVSD ein Druckminderventil (3) aufweist, das konfiguriert ist, um sicherzustellen, dass der SVSD unabhängig von der Systemstörung oberhalb eines minimalen Vorsteuerdrucks gehalten wird.

8. Steuervorrichtung (20) nach einem der vorherigen Ansprüche, wobei:
die Einstelleinrichtung des SVSD ferner einen Druckregler (22) aufweist, der konfiguriert ist, um einen SVSD zu steuern.

9. Steuervorrichtung (20) nach einem der vorherigen Ansprüche, wobei der Druckübersetzer (1) zwei Eingangsanschlüsse für Vorsteuerdrücke aufweist.

10. Steuervorrichtung (20) nach einem der Ansprüche 1 bis 8, wobei der Druckübersetzer (1) nur einen Eingangsanschluss für einen Vorsteuerdruck aufweist, und vor dem Druckübersetzer (1) ein Umschaltgerät (9) vorgesehen ist, damit nur einer der Vorsteuerdrücke weiter zu dem Druckübersetzer (1) durchgelassen wird.

11. Steuervorrichtung (20) nach Anspruch 10, wobei das Umschaltgerät (9) ein Doppelrückschlagventil (9) ist.

12. Steuervorrichtung (20) nach einem der vorherigen Ansprüche, wobei der Druckübersetzer (1) ein Relaisventil (1) ist.

13. Steuervorrichtung (20) nach einem der vorherigen Ansprüche, wobei der Druckübersetzer (1) einen Kolben (30) und mindestens einen Druckteller (32a, 32b) aufweist.

14. Verfahren zum Steuern eines Notbremsdrucks eines Fahrzeuges, wobei ein Notbremsdruck von einer pneumatischen oder hydraulischen Druckversorgung mittels eines Druckübersetzers (1) gesteuert und zur Verfügung gestellt wird, mit den folgenden Schritten:

- Einstellen eines Vorsteuerdrucks VSD1 mit einem Druckregler (21), wobei der VSD1 in Abhängigkeit von einem Beladungszustand des Fahrzeugs, einer Verzögerung, einer Geschwindigkeit und / oder einem Reibwert vorbestimmt wird,
- Einstellen eines Sicherheit-Vorsteuerdrucks SVSD mit einer Einstelleinrichtung,
- in einem regulären Betrieb:

- Durchlassen des VSD1 und Absperren des SVSD und Steuern der Druckversorgung nur mit dem VSD1,

- bei Systemstörung:

- Nicht Durchlassen des VSD1 und Durchlassen des SVSD und Steuern der Druckversorgung nur mit dem SVSD, wobei der Notbremsdruck dadurch abgesichert ist, dass er bei Systemstörung einen Nominaldruck nicht überschreitet.

15. Verfahren zum Steuern eines Notbremsdrucks eines Fahrzeuges nach Anspruch 14, wobei

- der VSD1 und der SVSD am Anfang beide auf das Niveau eines nominellen Vorsteuerdrucks eingestellt werden,
- der VSD1 im regulären Betrieb den Versorgungsdruck mittels des Druckübersetzers (1) so steuert, dass der Notbremsdruck größer als der VSD1 ist, und
- der SVSD bei Systemstörung den Versorgungsdruck mittels des Druckübersetzers (1) so steuert, dass der Notbremsdruck kleiner als der SVSD ist.

16. Verfahren zum Steuern eines Notbremsdrucks eines Fahrzeuges nach Anspruch 14, wobei

   - der VSD1 am Anfang auf das Niveau eines nominellen Vorsteuerdrucks mit einer Überhöhung eingestellt wird und der SVSD am Anfang auf das Niveau eines nominellen Vorsteuerdrucks ohne die Überhöhung eingestellt wird, und
   - der VSD1 im regulären Betrieb und der SVSD bei Systemstörung den Versorgungsdruck mittels des Druckübersetzers (1) in einer gleichen Weise so steuert, dass der Notbremsdruck in beiden Fällen kleiner als der VSD1 oder der SVSD ist.

17. Fahrzeug mit mindestens einer Steuervorrichtung (20) gemäß einem der Ansprüche 1 bis 13.

**Claims**

1. A control device (20) for controlling an emergency brake pressure of a vehicle, comprising:

   - a pressure regulator (21) configured to regulate a pilot pressure VSD1 for normal operation, the VSD1 being determined in advance dependent on a load condition of the vehicle, a deceleration, a speed and/or a coefficient of friction,
   - an adjusting device configured to control a safety pilot pressure SVSD in the event of a system malfunction,
   - a pressure converter (1), comprising:

      - a pressure inlet for a pneumatic or hydraulic pressure supply,
      - at least one pressure inlet for at least one pilot pressure,
      - a pressure outlet for an emergency brake pressure,

   the pressure converter (1) being configured to control a supply pressure of the pressure supply from the pilot pressure VSD1 or SVSD and then to output it as the emergency brake pressure,
   the control device (20) being configured in such a manner that
   in normal operation the VSD1 alone is fed to the pressure converter (1) to control the supply pressure, and in the event of a system malfunction the SVSD alone is fed to the pressure converter (1) to control the supply pressure, it being ensured that the emergency brake pressure remains below a nominal pressure in the event of a system malfunction.

2. A control device (20) according to claim 1, further comprising:
   a solenoid valve (7) that is arranged upstream of the pressure converter (1) and downstream of the pressure regulator (21), and is configured to allow the VSD1 through in normal operation and not to allow it through in the event of a system malfunction.

3. A control device (20) according to claim 1 or 2, further comprising:

   - a solenoid valve (8) that is arranged upstream of the pressure converter (1) and is configured to block the SVSD in normal operation and to allow it to pass to the pressure converter (1) in the event of a system malfunction.

4. A control device (20) according to any one of the preceding claims,
   the pressure regulator (21) comprising two solenoid valves (4, 5), one of them serving as an aerator and the other serving as a deaerator.

5. A control device (20) according to any one of the preceding claims, the pressure regulator (21) comprising a pressure sensor (6).

6. A control device (20) according to any one of the preceding claims, further comprising:
   a pressure-reducing valve (2) that is arranged upstream of the pressure regulator (21) to regulate a maximum permissible pilot pressure and to forward it to the pressure regulator (21).

7. A control device (20) according to any one of the preceding claims, the adjusting device of the SVSD comprising a pressure-reducing valve (3) that is configured to ensure that the SVSD is held above a minimal pilot pressure independently of the system malfunction.

8. A control device (20) according to any one of the preceding claims,
the adjusting device of the SVSD further comprising a pressure regulator (22) that is configured to control an SVSD.

9. A control device (20) according to any one of the preceding claims, the pressure converter (1) comprising two inlet ports for pilot pressures.

10. A control device (20) according to any one of claims 1 to 8,
the pressure converter (1) comprising only one inlet port for a pilot pressure, and a switching device (9) being provided upstream of the pressure converter (1) so that only one of the pilot pressures is allowed through to the pressure converter (1).

11. A control device (20) according to claim 10,
the switching device (9) being a double check valve (9).

12. A control device (20) according to any one of the preceding claims, the pressure converter (1) being a relay valve (1).

13. A control device (20) according to any one of the preceding claims, the pressure converter (1) comprising a piston (30) and at least one pressure plate (32a, 32b).

14. A method for controlling an emergency brake pressure of a vehicle, an emergency brake pressure being controlled and provided by a pneumatic or hydraulic pressure supply by means of a pressure converter (1), the method having the following steps:

- regulating the pilot pressure VSD1 using a pressure regulator (21), the VSD1 being predetermined dependent on a load condition of the vehicle, a deceleration, a velocity, and/or a coefficient of friction,
- adjusting a safety pilot pressure SVSD using an adjusting device,
- in normal operation:

- allowing the VSD1 through and blocking the SVSD, and controlling the pressure supply using the VSD1 alone,

- in the event of a system malfunction:

- not allowing the VSD1 through but letting the SVSD through, and controlling the pressure supply using the SVSD alone, the emergency brake pressure being ensured in that it is not permitted to exceed a nominal pressure in the event of a system malfunction.

15. A method for controlling an emergency brake pressure of a vehicle according to claim 14,

- the VSD1 and the SVSD both initially being adjusted to the level of a nominal pilot pressure,
- in normal operation, the VSD1 controlling the supply pressure by means of the pressure converter (1) in such a manner that the emergency brake pressure is greater than the VSD1, and
- in the event of a system malfunction, the SVSD controlling the supply pressure by means of the pressure converter (1) in such a manner that the emergency brake pressure is less than the SVSD.

16. A method for controlling an emergency brake pressure of a vehicle according to claim 14,

- the VSD1 initially being adjusted to the level of a nominal pilot pressure with an excessive increase and the SVSD initially being adjusted to the level of a nominal pilot pressure without the excessive increase, and
- both the VSD1 and the SVSD, in normal operation and in the event of a system malfunction respectively, controlling the supply pressure in an identical manner by means of the pressure converter (1) such that the emergency brake pressure in both cases is less than the VSD1 or the SVSD.

17. A vehicle having at least one control device (20) according to any one of claims 1 to 13.

**Revendications**

1. Système (20) de commande pour la commande d'une pression de frein d'urgence d'un véhicule, comportant :

   - un régleur (21) de pression configuré pour régler une pression VSD1 pilote pour un fonctionnement régulier, la VSD1 étant déterminée auparavant en fonction de l'état de charge du véhicule, d'une décélération, d'une vitesse et/ou d'un coefficient de frottement,
   - un dispositif de réglage configuré pour commander une pression SVSD pilote de sécurité si le système est perturbé,
   - un intensificateur (1) de pression comportant :

      - une entrée de pression pour une alimentation en pression pneumatique ou hydraulique,
      - au moins une entrée de pression pour au moins une pression pilote,
      - une sortie de pression pour une pression de frein d'urgence,

   dans lequel l'intensificateur (1) de pression est configuré pour commander une pression d'alimentation de l'alimentation en pression par la pression VSD1 ou SVSD pilote et pour la donner ensuite comme pression de frein d'urgence,
   dans lequel le système (20) de commande est configuré de manière à n'envoyer en fonctionnement régulier que la VSD1 à l'intensificateur (1) de pression pour la commande de la pression d'alimentation et, si le système est perturbé, à n'envoyer que la SVSD à l'intensificateur (1) de pression pour la commande de la pression d'alimentation, dans lequel il est assuré que la pression de frein d'urgence reste, lorsque le système est perturbé, en-dessous d'une pression nominale.

2. Système (20) de commande suivant la revendication 1, comportant en outre :

   une électrovanne (7), qui est montée avant l'intensificateur (1) de pression et après le régleur (21) de pression et qui est configurée pour laisser passer la VSD1 en fonctionnement régulier et ne pas la laisser passer lorsque le système est perturbé.

3. Système (20) de commande suivant la revendication 1, comportant en outre :

   - une électrovanne (8), qui est disposée avant l'intensificateur (1) de pression et qui est configurée pour bloquer la SVSD en fonctionnement régulier et la laisser passer vers l'intensificateur (1) de pression lorsque le système est perturbé.

4. Système (20) de commande suivant l'une des revendications précédentes, dans lequel le régleur (21) de pression a deux électrovannes (4, 5), dans lequel l'une d'entre elles sert d'alimenteur en air et l'autre d'entre elles sert de purgeur.

5. Système (20) de commande suivant l'une des revendications précédentes, dans lequel le régleur (21) de pression a un capteur (6) de pression.

6. Système (20) de commande suivant l'une des revendications précédentes, comportant en outre :
   un détendeur (2) qui est disposé avant le régleur (21) de pression pour régler une pression pilote admissible au maximum et la donner au régleur (21) de pression.

7. Système (20) de commande suivant l'une des revendications précédentes, dans lequel
   le dispositif de réglage de la SVSD a un détendeur (3), qui est configuré pour assurer que la SVSD est maintenue au-dessus d'une pression pilote minimum indépendamment de la perturbation du système.

8. Système (20) de commande suivant l'une des revendications précédentes, dans lequel :
   le dispositif de réglage de la SVSD a en outre un régleur (22) de pression, qui est configuré pour commander une SVSD.

9. Système (20) de commande suivant l'une des revendications précédentes, dans lequel l'intensificateur (1) de pression a deux raccords d'entrée pour des pressions pilotes.

**10.** Système (20) de commande suivant l'une des revendications 1 à 8, dans lequel l'intensificateur (1) de pression n'a qu'un raccord d'entrée pour une pression pilote et il est prévu avant l'intensificateur (1) de pression un appareil de commutation afin de ne laisser passer que l'une des pressions pilotes vers l'intensificateur (1) de pression.

**11.** Système (20) de commande suivant la revendication 10, dans lequel l'appareil (9) de commutation est un clapet (9) antiretour double.

**12.** Système (20) de commande suivant l'une des revendications précédentes, dans lequel l'intensificateur (1) de pression est une vanne (1) relais.

**13.** Système (20) de commande suivant l'une des revendications précédentes, dans lequel l'intensificateur (1) de pression a un piston (30) et au moins un plateau (32a, 32b) de pression.

**14.** Procédé de commande d'une pression de soin d'urgence d'un véhicule, dans lequel on commande et met à disposition une pression de frein d'urgence par une alimentation en pression pneumatique ou hydraulique au moyen d'un intensificateur (1) de pression, comprenant les stades suivants :

- réglage d'une pression VSD1 pilote par un régleur (21) de pression, la VSD1 étant déterminée à l'avance en fonction d'un état de charge du véhicule, d'une décélération, d'une vitesse et/ou d'un coefficient de frottement.
- réglage d'une pression SVSD pilote de sécurité par un dispositif de réglage,
- dans un fonctionnement régulier :

- on laisse passer la VSD1 et on bloque la SVSD et on ne commande l'alimentation en pression que par la VSD1,

- si le système est perturbé :

- on ne laisse pas passer la VSD1 et on laisse passer la SVSD et on ne commande l'alimentation en pression que par la SVSD, la pression de frein d'urgence étant sécurisée par le fait que si le système est perturbé une pression nominale n'est pas dépassée.

**15.** Procédé de commande d'une pression de frein d'urgence d'un véhicule suivant la revendication 14, dans lequel

- on règle la VSD1 à SVSD au début toutes deux au niveau d'une pression pilote nominale,
- la VSD1 commande en fonctionnement régulier la pression d'alimentation au moyen de l'intensificateur (1) de pression, de manière à ce que la pression de frein d'urgence soit plus grande que la VSD1 et
- la SVSD commande, si le système est perturbé, la pression d'alimentation au moyen de l'intensificateur (1) de pression de manière à ce que la pression de frein d'urgence soit plus petite que la SVSD.

**16.** Procédé de commande d'une pression de frein d'urgence d'un véhicule suivant la revendication 14, dans lequel

- on règle la VSD1 au début au niveau de la pression pilote nominale avec une surélévation et on règle la SVSD au début au niveau d'une pression pilote nominale sans la surélévation et
- la VSD1 commande en fonctionnement régulier et la SVSD commande, si le système est perturbé, la pression d'alimentation au moyen de l'intensificateur (1) de pression de la même façon de manière à ce que la pression de frein d'urgence soit dans les deux cas plus petite que la VSD1 ou la SVSD.

**17.** Véhicule ayant au moins un système (20) de commande suivant l'une des revendications 1 à 13.

Max. zulässige Verzögerung

Notbremsdruck = Nominaldruck

Verzögerung

Reibwert

V

Fig. 1

Max. zulässige Verzögerung

Versorgungsdruck

Verzögerung

Notbremsdruck

Reibwert

V

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009051019 A1